# EUROPEAN PATENT SPECIFICATION

(11) **EP 4 137 854 B1**
(45) Date of publication and mention of the grant of the patent: **27.11.2024**
(21) Application number: 22190558.1
(22) Date of filing: 16.08.2022
(51) Int. Cl.: H01B 13/32, G02B 6/38

(54) **INTERSTITIAL RECESSED CANTILEVER LATCH MECHANISM FOR FIBER OPTIC AND ELECTRICAL CONNECTORS**
INTERSTITIELLER VERTIEFTER FREITRAGENDER VERRIEGELUNGSMECHANISMUS FÜR FASEROPTISCHE UND ELEKTRISCHE VERBINDER
MÉCANISME DE VERROUILLAGE EN PORTE-À-FAUX ENCASTRÉ INTERSTITIEL POUR CONNECTEURS À FIBRES OPTIQUES ET ÉLECTRIQUES

(30) Priority: 16.08.2021 US 202163259856 P
(43) Date of publication of application: 22.02.2023
(73) Proprietor: Nest Technical Services, Inc., Westerly, RI 02891 (US)
(72) Inventor: Smith, Daniel M., Westerly, RI 02891 (US); Smith, William M., Dedham, MA 02026 (US)
(74) Representative: Studio Torta S.p.A.

(56) References cited:
- US-A1- 2018 003 903
- US-A1- 2020 049 898
- US-A1- 2021 191 050
- US-B2- 10 663 676
- US-B2- 10 732 361

## Description

### CROSS-REFERENCE TO RELATED APPLICATIONS

This application claims the benefit of U.S. Provisional Patent Application No. 63/259,856, which was filed on August 16, 2021.

### FIELD OF THE INVENTION

This invention relates to the latching of fiber optic and electrical connectors and adapters, and securing the mated connections resulting therefrom.

### BACKGROUND OF THE INVENTION

As data demands have increased, the tendency has been for the overall size of both electrical and fiber optic connectors to get smaller, so as to enable fitting more connectors of a given type into a given physical space. However, given the performance requirements, there is a limit to how small the contacts, whether they are electrical pins or fiber optic ferrules, can realistically be. Any means of reducing the overall size of a given connector would therefore be advantageous.

Latch-type connectors are commonly seen across the industry in both electrical and fiber optic connectors. Examples of electrical connectors include the RJ11 and RJ45 interfaces, while in the realm of fiber optics, the common LC and MPO types both use latches to result in a mechanically secure connection. Latches are usually preferred over electrical press-fit connectors, such as USB-A connector, because they provide visual, audible, and tactile feedback to the user when properly mated. In the case of fiber connectors, a latch is necessary to provide sufficient and secure depth-of-mate to ensure physical contact upon which optical performance of the connection depends.

A major drawback of traditional latch-type designs is that the latch is always placed outside the envelope of the contact pattern. This means that the inclusion of the latch mechanism increases the overall envelope of the connector interface, forcing it to become either wider or taller than the connector would otherwise need to be. As such, a mechanism which utilizes the space between contacts could achieve the advantages of a latch-type connection while simultaneously minimizing the overall size of the connector interface.

US 2021/0191050 discloses a fiber optic connector port arrangement including at least one upper receptacle and at least one lower receptacle vertically aligned with the upper receptacle to form a column of receptacles, the column including a center divider that divides the at least one upper receptacle from the at least one lower receptacle. The center divider defines latching shoulders for mating with latches of both a connector to be mounted at the upper receptacle of the column and a connector to be mounted at the lower receptacle of the column.

### SUMMARY OF THE INVENTION

The present invention relates to a connector assembly as claimed in claim 1, a connector system as claimed in claim 17 and a method of connector assembly as claimed in claim 18.

Embodiments of the inventive connectors and connector components described overcome disadvantages of traditional connectors, connector components, and attachment means, and allow more connectors to be used within a given space. In particular, the exemplary connectors discussed herein include a mechanism that does not increase the overall envelope of the connector interface, thereby necessitating less space for a proper connector by minimizing the overall size of the connector interface. Such reduction of the connector interface size allows a greater number of connectors to be used within a given space, as compared to traditional connectors.

According to one embodiment of the invention, there is provided a connector plug comprised of a connector housing at the proximal end, a two-part backshell at the distal end, with a plurality of contacts housed within in a pre-defined contact pattern. Cantilever latching arms extend from the proximal end of the backshell. When mating with the receptacle, these latching arms depress into interstices between contact positions on the plug and snap into latching points located on the receptacle. Touch points are provided to enable the user to depress the latching arms and release the connector plug when required.

According to another embodiment of the invention, the two parts of the backshell are identical and mate to each other hermaphroditically.

According to another embodiment of the invention, an ergonomically-designed decoupler is added encircling the connector plug, which when pulled towards the distal end of the connector, cams over an angled surface on the latching arms, depressing them and releasing the connector plug.

In accordance with embodiments not according to the claimed invention, an exemplary connector assembly is provided. The connector assembly includes a plug housing including contacts. The plug housing defines a proximal end and a distal end. The connector assembly includes a backshell located at or near the distal end of the plug housing. The backshell includes a latching mechanism extending from a proximal end of the backshell. The latching mechanism is at least partially recessed into a complementary space formed in the plug housing.

In some embodiments, the contacts can include an array of 8 contacts. In some embodiments, the backshell can include a first backshell half and a second backshell half. In some embodiments, the first and second backshell halves can be identical (or substantially identical) and can be configured to engage relative to each other to form the backshell. In some embodiments, the first and second backshell halves can assemble to one another hermaphroditically.

The complementary space formed in the plug housing can be a recessed groove or an opening formed in a top surface of the plug housing and configured to at least partially receive the latching mechanism of the backshell. The latching mechanism can include a cantilever with at least one latch extending from a proximal end of the cantilever. In the at least partially recessed position of the latching mechanism, the at least one latch of the cantilever can be disposed in an interstitial space between the contacts of the plug housing.

The cantilever can include a press surface extending from the backshell, a ramp extending from the press surface, and the at least one latch extending from the ramp. The press surface can define a broad surface capable of being biased to lower the at least one latch deeper into the complementary space of the plug housing. The at least one latch can be configured to engage with a complementary latch point of a receptacle. Biasing the cantilever to lower the at least one latch deeper into the complementary space of the plug housing can disengage the at least one latch from the complementary latch point of the receptacle.

In some embodiments, the connector assembly can include a decoupler slidably disposed over the plug housing and/or the backshell. Sliding the decoupler over the ramp of the cantilever depresses and biases the at least one latch deeper into the complementary space of the plug housing to disengage the at least one latch from a complementary latch point of a receptacle.

In some embodiments, the contacts can fiber optic ferrules. In some embodiments, the contacts can be electrical contacts. In some embodiments, the contacts can include at least one fiber optic ferrules and at least one electrical contact. In some embodiments, the latching mechanism can include a plurality of cantilevers, each of the cantilevers including at least one latch located at a proximal end of the respective cantilever.

In accordance with embodiments not according to the claimed invention, an exemplary connector system is provided. The connector system includes a connector assembly including a plug housing and a backshell. The plug housing includes contacts, and defines a proximal end and a distal end. The backshell is located at or near the distal end of the plug housing. The connector system includes a receptacle configured to at least partially receive the contacts of the connector assembly. The backshell includes a latching mechanism extending from a proximal end of the backshell. The latching mechanism is at least partially recessed into a complementary space formed in the plug housing.

In accordance with embodiments not according to the claimed invention, an exemplary method of connector assembly is provided. The method includes electrically or optically connecting a connector assembly with a receptacle. The connector assembly includes a plug housing including contacts. The plug housing defines a proximal end and a distal end. The connector assembly includes a backshell located at or near the distal end of the plug housing. The backshell includes a latching mechanism extending from a proximal end of the backshell. The latching mechanism is at least partially recessed into a complementary space formed in the plug housing. The method includes depressing the latching mechanism further into the complementary space formed in the plug housing to disengage the connector assembly from the receptacle.

Additional advantageous functions, features, and applications of the disclosed systems, methods, and assemblies will be apparent from the detailed description which follows, particularly when read in conjunction with the appended figures.

### BRIEF DESCRIPTION OF THE DRAWINGS

Other aspects and advantages of the invention will be apparent from the following detailed description wherein reference is made to the accompanying drawings. In order that the invention may be more fully understood, the following figures are provided by way of illustration, in which:
FIG. 1 is a perspective view of an exemplary fiber optic connector plug assembly with cantilever latch arms extending from the backshell.
FIG. 2 is a front or face view of the proximal end of the fiber optic plug assembly of FIG. 1.
FIG. 3 is a perspective view of the connector plug assembly of FIGS. 1-2 with an additional sliding decoupler assembled to the connector plug assembly;
FIG. 4 is a perspective view of a receptacle which mates to the connector plug assembly of FIGS. 1-3.
FIG. 5 is a cross-sectional side view of the connector plug assembly of FIG. 3 when latched to the receptacle of FIG. 4, sectioned in plane with one of the latches.
FIGS. 6A and 6B are top and bottom perspective views of a hermaphroditically assembled backshell half of the connector plug assembly.
FIGS. 7A and 7B are perspective and front views of a traditional connector with the latch mechanism external to the contact field envelope.

### DETAILED DESCRIPTION OF THE INVENTION

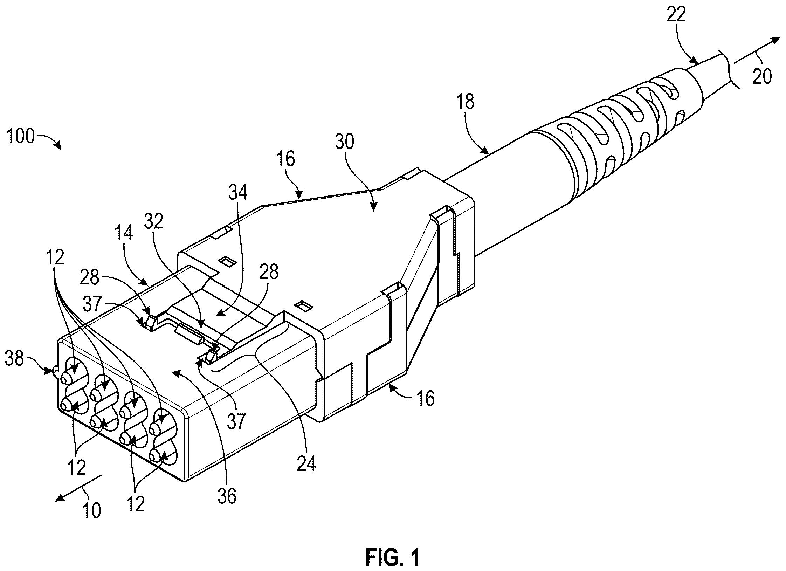

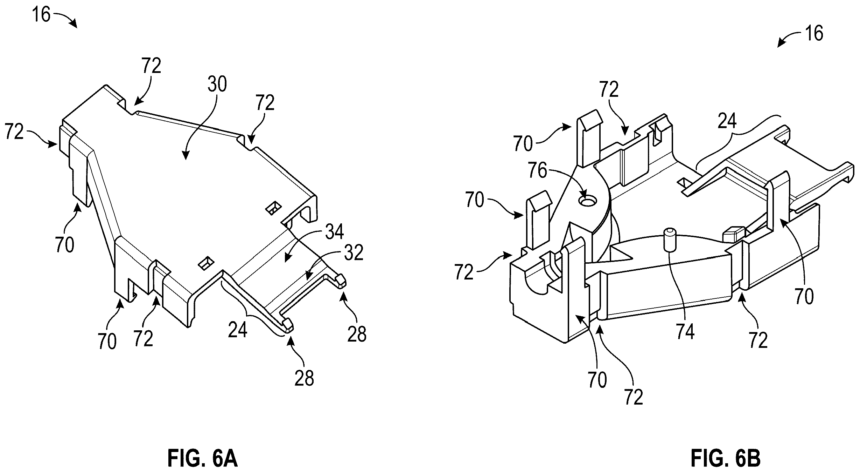

FIG. 1 illustrates an exemplary plug assembly 100. The contacts, in this case fiber optic ferrules 12, are arrayed in a 4x2 pattern at proximal end 10 of the connector, housed within plug housing 14. However, it should be understood that the plug assembly 100 can include different types of contacts. The housing 14 is assembled between two backshell halves 16, with an elastomeric connector boot 18 providing strain relief for a cable 22 extending from main body 30 in the direction of distal end 20. The two backshell halves 16 are identical in structure, and can therefore be interchanged and interlocked relative to each other and the housing 14. Extending from each backshell half 16, in the direction of proximal end 10, is a cantilever 24 (e.g., a flange), which fits into opening 26 of plug housing 14 (see, e.g., FIGS. 6A and 6B). Each cantilever 24 includes two latches 28 at a proximal end, a press surface 34 adjacent to and connecting the cantilever 24 to the main body portion of the backshell half 16, and a ramp 32 between the latches 28 and the press surface 34. The cantilever 24 acts as a latching means or latching mechanism for the plug assembly 100.

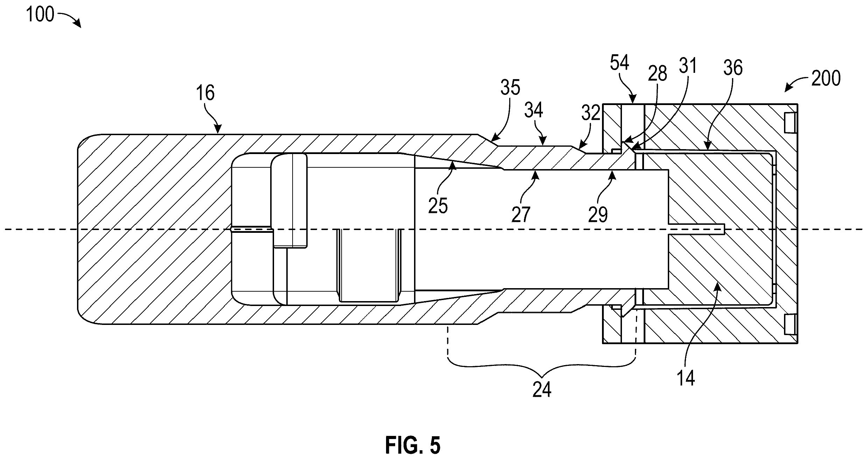

With particular reference to FIG. 5, in some embodiments, the bottom surface (e.g., the inwardly facing surface) of the cantilever 24 generally extends along the same plane, while the top surface of the cantilever 24 defines different profiles at the latches 28, the press surface 34, and the ramp 32. In some embodiments, the bottom or inner surface of the cantilever 24 can initially taper inwardly at a tapered section 25 before extending along the same plane at planar section 27. The cantilever 24 can include a downwardly directed ramp 35 at a distal end and connecting the backshell half 26 to the press surface 34. The press surface 34 can extend from the backshell half 16 at a plane below the top surface of the backshell half 16, and generally defines a substantially planar, continuous surface. The ramp 32 tapers downwardly to a second plane below the plane of the press surface 34. The latches 28 include two spaced flanges 29 extending from the proximal end of the ramp 32, with an upwardly directed protrusion 31 extending from the proximal end of each flange 29. The top or endpoint of each protrusion 31 substantially aligns with or does not extend beyond the plane defined by the press surface 34. The entire structure of the cantilever 24 therefore extends below the plane defined by the top surface of the backshell half 16.

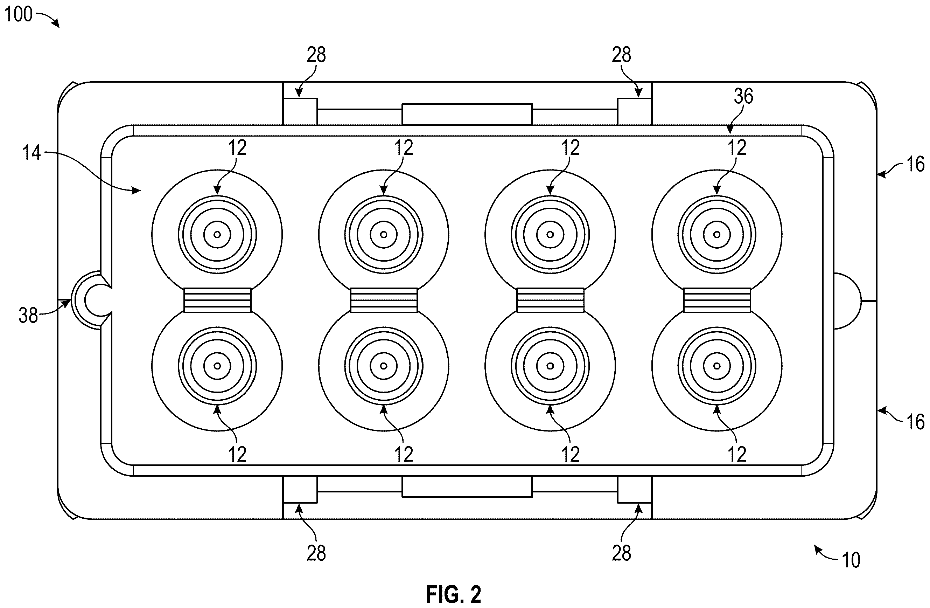

At least part of the cantilever 24 therefore sits below the top surface 36 of plug housing 14. In particular, the top surface 36 of the plug housing 14 includes an opening or recessed area 37 (e.g., a complementary space) formed therein and substantially complementary to the shape of the cantilever 24. During assembly, as illustrated in FIG. 1, the cantilever 24 at least partially fits within the recessed area 37 in the top surface 36 of the plug housing 14, resulting in the cantilever 24 sitting at least partially below the top surface 36 of the plug housing 14. The underside of plug assembly 100 is substantially identical to the top side illustrated in FIG. 1, aside from the placement of alignment key 38 on a side surface of the plug assembly 100, as can be more clearly seen in FIG. 2. Therefore, the bottom side or underside of plug assembly 100 similarly includes a similar recessed area 37 to accommodate the cantilever 24 of the other backshell half 16.

Also, as is more easily observed in FIG. 2, the latches 28 are placed in the interstitial space between fiber optic ferrules 12, affording the maximum distance inside the plug housing 14 for the cantilever to depress and release plug assembly 100 from a mating receptacle. This can be performed by applying simultaneous inward pressure to press surface 34 on both backshell halves 16. During this action, latches 28 can retract below top surface 36, enabling the latching mechanism to remain as close to the envelope of plug housing 14 as possible. The recessed area 37 formed in the top surface 36 of the plug housing 14 is sufficient to accommodate retraction of the latches 28 and at least partially the other structures of the cantilever 24 further below the top surface 36 when pressure is applied to the press surfaces 34. Therefore, FIG. 2 illustrates the latches 28 in a "normal" position prior to application of inward or downward force to retract the latches 28. When the force is applied to the press surface 34, the latches 28 retract below the plane defined by the top surface 36. Therefore, as illustrated in FIG. 2, in the "normal" orientation or position, the latches 28 extend above the top surface 36 of the plug housing 14 while remaining below the top surface of the backshell half 16; and in the "retracted" orientation or position, the latches 28 can be biased to a position below the top surface 36 of the plug housing 14.

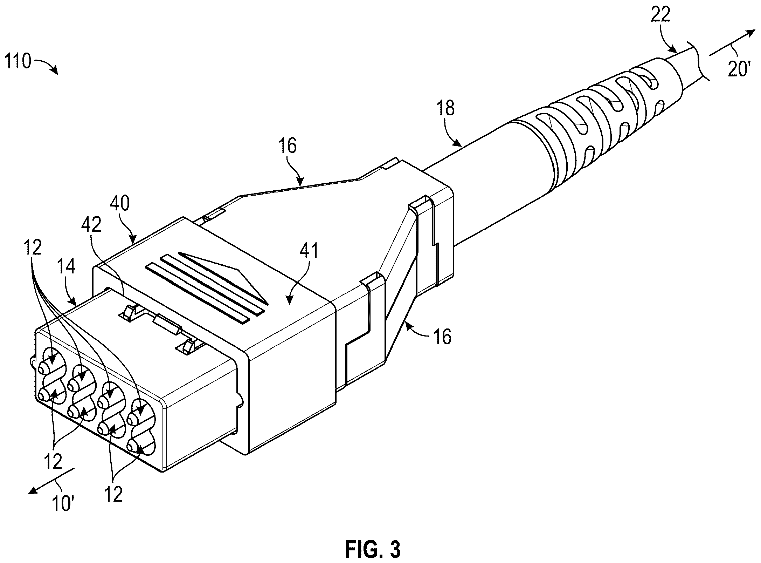

Further improvement to the assembly ergonomics is possible with the addition of another component as seen in FIG. 3. Here, exemplary plug assembly 110 is made using all of the same components as plug assembly 100 from FIGS. 1 and 2, with the addition of decoupler 40. The decoupler 40 includes a body 41 that generally defines a rectangular configuration with an opening 42 that is complementary to the outer surface(s) of the plug housing 14 and the backshell halves 16. The decoupler 40 is slidably positioned at least partially over the plug housing 14 and at least partially over the backshell halves 16 such that the cantilever 24 is capable of being partially covered by the decoupler 40. When decoupler 40 is pulled in the direction of distal end 20', the inner surface of the opening 42 engages with ramp 32, which is hidden underneath decoupler 40 in FIG. 3, to bias or force the latches 28 downward/inward. This action retracts the latches 28 inside of plug housing 14, releasing plug assembly 110 from a mating receptacle (e.g., releasing engagement of latches 28 from complementary structures within the mating receptacle to allow for removal of the plug assembly 110 from the mating receptacle). The decoupler 40 may be useful in high-density applications where finger access to the connector may be limited.

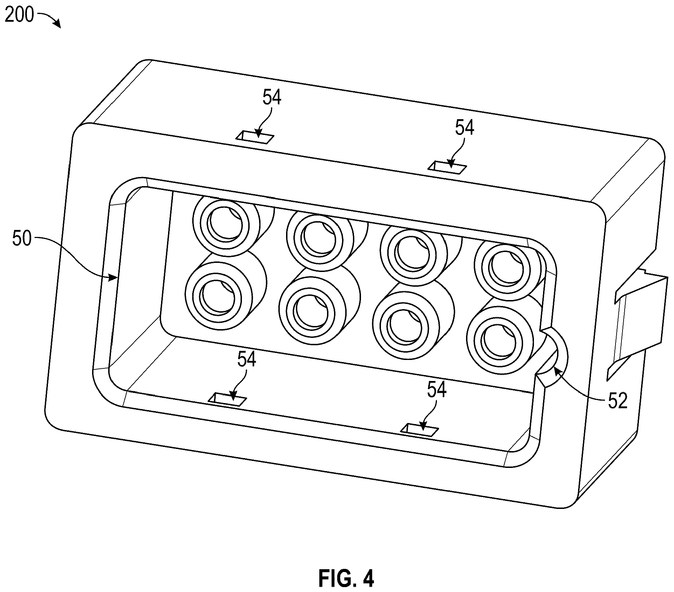

Both plug assembly 100 from FIGS. 1 and 2 and plug assembly 110 from FIG. 3 are designed to mate to the exemplary receptacle 200 shown in FIG. 4. The receptacle 200 provides front opening 50 to accept the proximal ends 10 and 10' of plug assemblies 100 and 110, respectively. Keyway 52 aligns with alignment key 38 of plug housing 14, ensuring contacts line up when the latches 28 snap into latch points 54. In particular, the latch points 54 define grooves or openings extending from the inner surface of the opening 50 at a position complementary to the latches 28 of the plug assembly 100, 110. When the plug assembly 100, 110 is inserted into the opening 50, the latches 28 snap into and engage with latch points 54 to maintain the plug assembly 100, 110 properly connected to the receptacle 200. Biasing of the latches 28 downward disengages the latches 28 from the latch points 54, allowing for removal of the plug assembly 100, 110 from the receptacle 200. The top and bottom edges/surfaces of opening 50 are completely smooth, as no vertical allowance is required to enable actuation and clearance of the latches 28 in that direction. The size of the opening 50 and the overall size of the receptacle 200 can thereby be kept at a minimum. In contrast, traditional plug assemblies would necessitate additional features for latch clearance, expanding the overall envelope of the connector interface and increasing the overall size of the receptacle.

The simplicity of the latching mechanism is further illustrated by FIG. 5, in which the plug assembly 100 has been mated to receptacle 200. The contacts have been removed from FIG. 5 for the sake of clarity. At this particular section point, there would be contacts in front of and behind the section plane, but open clearance inside the assembly where cantilever 24 would be depressed when mating and unmating plug assembly 100.

FIGS. 6A and 6B shows exemplary backshell half 16 in greater detail, with top and bottom perspective views. The backshell half 16 is designed to assemble hermaphroditically, so that the exact same component can be used for both the top and bottom half of a given backshell, rather than requiring two different molded parts. This simplifies assembly and/or replacement of parts. Snap extensions 70 are mirrored by snap slots 72, as locator post 74 is mirrored by locator hole 76. It should be noted that it is not strictly necessary for both backshell halves to be identical, and that a functional connector plug assembly could be constructed with latches on only one side of the backshell. However, using a hermaphroditic design as exemplified in FIGS. 6A and 6B reduces the number of different components in the top level assembly, while increasing the production volumes of the backshell half components. This reduces the tooling and unit production costs of the top level assembly, respectively.

Although the above example revolves around a fiber optic connector design, it would be clear to a person skilled in the art that the latch design mechanism and principles of layout and construction would apply to low voltage electrical connectors, as well. At higher voltages, the requisite opening in the connector plug housing may pose a safety risk, limiting the usefulness of the design.

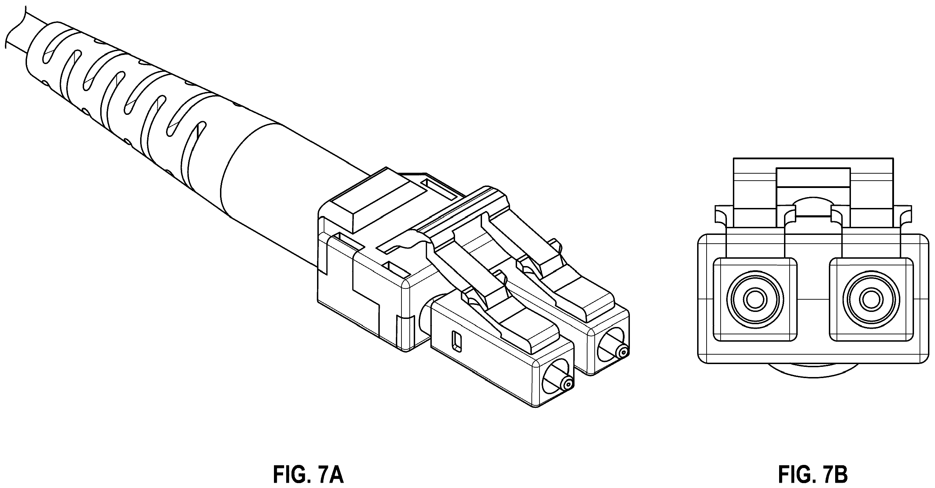

When comparing the present invention to prior art connectors such as the LC type, a duplex version of which is shown in FIGS. 7A and 7B, there is an obvious difference in the ratio between the outward size of the latching mechanism as compared to the area occupied by contacts at the proximal end of the connector. With the LC connector, the latch mechanism occupies nearly half of the proximal area, whereas with the present invention, it occupies a negligible part of it. The result is a smaller connector for a given contact pattern, enabling higher contact densities at the panel, and superior ergonomics at equal densities as compared to previous technologies.

The above example is used for illustrative purposes only, and should not be construed as limiting. Additional advantageous functions, features, and applications of the disclosed systems, methods, and assemblies will be apparent to persons skilled in the art when combined with the appended figures.

## Claims

1. A connector assembly (100), comprising:
a plug housing (14) including contacts (12), the plug housing (14) defining a proximal end (10) and a distal end (20); and
a backshell (16) located at or near the distal end (20) of the plug housing (14);
wherein the backshell (16) includes a latching mechanism extending from a proximal end of the backshell (16) and including a cantilever (24) with at least one latch (28) extending from the proximal end of the cantilever (24), and the latching mechanism is at least partially recessed into a complementary space (37) formed in the plug housing (14); and
wherein in the at least partially recessed position of the latching mechanism, the at least one latch (28) of the cantilever (24) is disposed in an interstitial space between the contacts (12) of the plug housing (14).

2. The connector assembly (100) of claim 1, wherein the contacts (12) include an array of 8 contacts (12).

3. The connector assembly (100) of claim 1, wherein the backshell (16) includes a first backshell half (16) and a second backshell half (16).

4. The connector assembly (100) of claim 3, wherein the first and second backshell halves (16) are identical and are configured to engage relative to each other to form the backshell (16).

5. The connector assembly (100) of claim 3, wherein the first and second backshell halves (16) assemble to one another hermaphroditically.

6. The connector assembly (100) of claim 1, wherein the complementary space (37) formed in the plug housing (14) is a recessed groove or an opening formed in a top surface (36) of the plug housing (14) and is configured to at least partially receive the latching mechanism of the backshell (16).

7. The connector assembly (100) of claim 1, wherein the cantilever (24) includes a press surface (34) extending from the backshell (16), a ramp (32) extending from the press surface (34), and the at least one latch (28) extending from the ramp (32).

8. The connector assembly (100) of claim 7, wherein the press surface (34) defines a broad surface capable of being biased to lower the at least one latch (28) deeper into the complementary space (37) of the plug housing (14).

9. The connector assembly (100) of claim 7, wherein the at least one latch (28) is configured to engage with a complementary latch point (54) of a receptacle (200).

10. The connector assembly (100) of claim 9, wherein biasing the cantilever (24) to lower the at least one latch (28) deeper into the complementary space (37) of the plug housing (14) disengages the at least one latch (28) from the complementary latch point (54) of the receptacle (200).

11. The connector assembly (100) of claim 8, comprising a decoupler (40) slidably disposed over the plug housing (14) and the backshell (16).

12. The connector assembly (100) of claim 11, wherein sliding the decoupler (40) over the ramp (32) of the cantilever (24) depresses and biases the at least one latch (28) deeper into the complementary space (37) of the plug housing (14) to disengage the at least one latch (28) from a complementary latch point (54) of a receptacle (200).

13. The connector assembly (100) of claim 1, wherein the contacts (12) are fiber optic ferrules.

14. The connector assembly (100) of claim 1, wherein the contacts (12) are electrical contacts.

15. The connector assembly (100) of claim 1, wherein the contacts (12) include at least one fiber optic ferrule and at least one electrical contact.

16. The connector assembly (100) of claim 1, wherein the latching mechanism includes a plurality of cantilevers (24), each of the cantilevers (24) including the at least one latch (28) located at the proximal end of the respective cantilever (24).

17. A connector system, comprising:
a connector assembly (100) according to any of the preceding claims and a receptacle (200) configured to at least partially receive the contacts (12) of the connector assembly (100).

18. A method for connecting a connector assembly (100) according to any of claims 1-16 , comprising:
electrically or optically connecting the connector assembly (100) with a receptacle (200) ; and
depressing the latching mechanism further into the complementary space (37) formed in the plug housing (14) to disengage the connector assembly (100) from the receptacle (200).

## Patentansprüche

1. Verbinderanordnung (100), umfassend:
ein Steckergehäuse (14) mit Kontakten (12), wobei das Steckergehäuse (14) ein proximales Ende (10) und ein distales Ende (20) definiert; und
ein Endgehäuse (16), das sich am oder in der Nähe des distalen Endes (20) des Steckergehäuses (14) befindet;
wobei das Endgehäuse (16) einen Feststellungsmechanismus einschließt, der sich von einem proximalen Ende des Endgehäuses (16) aus erstreckt und einen Ausleger (24) mit mindestens einer Feststellung (28) einschließt, die sich von dem proximalen Ende des Auslegers (24) aus erstreckt, und der Feststellungsmechanismus mindestens teilweise in einen komplementären Raum (37), der in dem Steckergehäuse (14) ausgebildet ist, eingelassen ist; und
wobei in der mindestens teilweise eingelassenen Position des Feststellungsmechanismus die mindestens eine Feststellung (28) des Auslegers (24) in einem Zwischenraum zwischen den Kontakten (12) des Steckergehäuses (14) angeordnet ist.

2. Verbinderanordnung (100) nach Anspruch 1, wobei die Kontakte (12) eine Anordnung von 8 Kontakten (12) einschließen.

3. Verbinderanordnung (100) nach Anspruch 1, wobei das Endgehäuse (16) eine erste Endgehäusehälfte (16) und eine zweite Endgehäusehälfte (16) einschließt.

4. Verbinderanordnung (100) nach Anspruch 3, wobei die erste und die zweite Endgehäusehälfte (16) identisch sind und so konfiguriert sind, dass sie relativ zueinander in Eingriff kommen, um das Endgehäuse (16) zu bilden.

5. Verbinderanordnung (100) nach Anspruch 3, wobei die erste und die zweite Endgehäusehälfte (16) sich hermaphroditisch zusammensetzen.

6. Verbinderanordnung (100) nach Anspruch 1, wobei der komplementäre Raum (37), der in dem Steckergehäuse (14) ausgebildet ist, eine eingelassene Nut oder eine Öffnung ist, die in einer oberen Oberfläche (36) des Steckergehäuses (14) ausgebildet ist und so konfiguriert ist, dass er mindestens teilweise den Feststellungsmechanismus des Endgehäuses (16) aufnimmt.

7. Verbinderanordnung (100) nach Anspruch 1, wobei der Ausleger (24) eine Druckfläche (34), die sich von dem Endgehäuse (16) erstreckt, eine Rampe (32), die sich von der Druckfläche (34) erstreckt, und die mindestens eine Feststellung (28), die sich von der Rampe (32) erstreckt, einschließt.

8. Verbinderanordnung (100) nach Anspruch 7, wobei die Druckfläche (34) eine breite Oberfläche definiert, die vorgespannt werden kann, um die mindestens eine Feststellung (28) tiefer in den komplementären Raum (37) des Steckergehäuses (14) abzusenken.

9. Verbinderanordnung (100) nach Anspruch 7, wobei die mindestens eine Feststellung (28) so konfiguriert ist, dass sie einen komplementären Feststellungspunkt (54) einer Aufnahme (200) in Eingriff nimmt.

10. Verbinderanordnung (100) nach Anspruch 9, wobei das Vorspannen des Auslegers (24), um die mindestens eine Feststellung (28) tiefer in den komplementären Raum (37) des Steckergehäuses (14) abzusenken, die mindestens eine Feststellung (28) von dem komplementären Feststellungspunkt (54) der Aufnahme (200) löst.

11. Verbinderanordnung (100) nach Anspruch 8, umfassend einen Entkoppler (40), der verschiebbar über dem Steckergehäuse (14) und dem Endgehäuse (16) angeordnet ist.

12. Verbinderanordnung (100) nach Anspruch 11, wobei das Verschieben des Entkopplers (40) über die Rampe (32) des Auslegers (24) die mindestens eine Feststellung (28) tiefer in den komplementären Raum (37) des Steckergehäuses (14) drückt und vorspannt, um die mindestens eine Feststellung (28) von einem komplementären Feststellungspunkt (54) einer Aufnahme (200) zu lösen.

13. Verbinderanordnung (100) nach Anspruch 1, wobei die Kontakte (12) Glasfaser-Ferrulen sind.

14. Verbinderanordnung (100) nach Anspruch 1, wobei die Kontakte (12) elektrische Kontakte sind.

15. Verbinderanordnung (100) nach Anspruch 1, wobei die Kontakte (12) mindestens eine Glasfaser-Ferrule und mindestens einen elektrischen Kontakt einschließen.

16. Verbinderanordnung (100) nach Anspruch 1, wobei der Feststellungsmechanismus eine Vielzahl von Auslegern (24) einschließt, wobei jeder der Ausleger (24) die mindestens eine Feststellung (28) einschließt, die am proximalen Ende des jeweiligen Auslegers (24) angeordnet ist.

17. Verbindersystem, umfassend:
eine Verbinderanordnung (100) nach einem der vorstehenden Ansprüche, und
eine Aufnahme (200), die so konfiguriert ist, dass sie mindestens teilweise die Kontakte (12) der Verbinderanordnung (100) aufnimmt.

18. Verfahren zum Verbinden einer Verbinderanordnung (100) nach einem der Ansprüche 1 bis 16, umfassend:
elektrisches oder optisches Verbinden der Verbinderanordnung (100) mit einer Aufnahme (200); und
Drücken des Feststellungsmechanismus weiter in den komplementären Raum (37), der im Steckergehäuse (14) ausgebildet ist, um die Verbinderanordnung (100) von der Aufnahme (200) zu lösen.

## Revendications

1. Ensemble connecteur (100) comprenant :
un boîtier de fiche (14) comprenant des contacts (12), le boîtier de fiche (14) définissant une extrémité proximale (10) et une extrémité distale (20) ; et
une coque arrière (16) située à l'extrémité distale (20) du boîtier de fiche (14) ou à proximité de celle-ci ;
dans lequel la coque arrière (16) comprend un mécanisme de verrouillage s'étendant à partir d'une extrémité proximale de la coque arrière (16) et comprenant un cantilever (24) avec au moins un verrou (28) s'étendant à partir de l'extrémité proximale du cantilever (24), et le mécanisme de verrouillage est au moins partiellement encastré dans un espace complémentaire (37) formé dans le boîtier de fiche (14) ; et
dans lequel, dans la position au moins partiellement encastrée du mécanisme de verrouillage, l'au moins un verrou (28) du cantilever (24) est disposé dans un espace interstitiel entre les contacts (12) du boîtier de fiche (14).

2. Ensemble connecteur (100) selon la revendication 1, dans lequel les contacts (12) comprennent un réseau de 8 contacts (12).

3. Ensemble connecteur (100) selon la revendication 1, dans lequel la coque arrière (16) comprend une première moitié de coque arrière (16) et une seconde moitié de coque arrière (16).

4. Ensemble connecteur (100) selon la revendication 3, dans lequel la première et la seconde moitié de coque arrière (16) sont identiques et sont configurées pour s'engager l'une par rapport à l'autre afin de former la coque arrière (16).

5. Ensemble connecteur (100) selon la revendication 3, dans lequel la première et la seconde moitié de la coque arrière (16) s'assemblent l'une à l'autre de manière hermaphrodite.

6. Ensemble connecteur (100) selon la revendication 1, dans lequel l'espace complémentaire (37) formé dans le boîtier de fiche (14) est une rainure évidée ou une ouverture formée dans une surface supérieure (36) du boîtier de fiche (14) et est configuré pour recevoir au moins partiellement le mécanisme de verrouillage de la coque arrière (16).

7. Ensemble connecteur (100) selon la revendication 1, dans lequel le cantilever (24) comprend une surface de pression (34) s'étendant à partir de la coque arrière (16), une rampe (32) s'étendant à partir de la surface de pression (34), et au moins un verrou (28) s'étendant à partir de la rampe (32).

8. Ensemble connecteur (100) selon la revendication 7, dans lequel la surface de pression (34) définit une surface large pouvant être sollicitée pour abaisser l'au moins un verrou (28) plus profondément dans l'espace complémentaire (37) du boîtier de fiche (14).

9. Ensemble connecteur (100) selon la revendication 7, dans lequel l'au moins un verrou (28) est configuré pour s'engager dans un point de verrouillage complémentaire (54) d'un réceptacle (200) .

10. Ensemble connecteur (100) selon la revendication 9, dans lequel le fait de solliciter le cantilever (24) pour abaisser l'au moins un verrou (28) plus profondément dans l'espace complémentaire (37) du boîtier de fiche (14) désengage l'au moins un verrou (28) du point de verrouillage complémentaire (54) du réceptacle (200).

11. Ensemble connecteur (100) selon la revendication 8, comprenant un découpleur (40) disposé de manière coulissante sur le boîtier de fiche (14) et la coque arrière (16).

12. Ensemble connecteur (100) selon la revendication 11, dans lequel le glissement du découpleur (40) sur la rampe (32) du cantilever (24) enfonce et pousse l'au moins un verrou (28) plus profondément dans l'espace complémentaire (37) du boîtier de fiche (14) pour désengager l'au moins un verrou (28) d'un point de verrou complémentaire (54) d'un réceptacle (200).

13. Ensemble connecteur (100) selon la revendication 1, dans lequel les contacts (12) sont des viroles de fibre optique.

14. Ensemble connecteur (100) selon la revendication 1, dans lequel les contacts (12) sont des contacts électriques.

15. Ensemble connecteur (100) selon la revendication 1, dans lequel les contacts (12) comprennent au moins une virole de fibre optique et au moins un contact électrique.

16. Ensemble connecteur (100) selon la revendication 1, dans lequel le mécanisme de verrouillage comprend une pluralité de cantilevers (24), chacun des cantilevers (24) comprenant l'au moins un verrou (28) situé à l'extrémité proximale du cantilever (24) respectif.

17. Système de connexion comprenant :
un ensemble connecteur (100) selon l'une quelconque des revendications précédentes, et
un réceptacle (200) configuré pour recevoir au moins partiellement les contacts (12) de l'ensemble connecteur (100).

18. Procédé de connexion d'un ensemble connecteur (100) selon l'une quelconque des revendications 1 à 16, comprenant :
la connexion électrique ou optique de l'ensemble connecteur (100) avec un réceptacle (200) ; et
l'enfoncement du mécanisme de verrouillage plus loin dans l'espace complémentaire (37) formé dans le boîtier de fiche (14) pour désengager l'ensemble connecteur (100) du réceptacle (200).
